# EUROPEAN PATENT SPECIFICATION

(11) **EP 0 873 825 B1**
(45) Date of publication and mention of the grant of the patent: **02.07.2003**
(21) Application number: 98106615.2
(22) Date of filing: 09.04.1998
(51) Int. Cl.: B25H 5/00, B25H 1/04, B25H 1/10, B25H 1/12, F16M 11/12, B62D 51/00

(54) **Support trolley for an electronic diagnostic unit for an industrial vehicle**
Fahrbahrer Träger für eine elektronische Diagnoseeinheit für ein Industriefahrzeug
Chariot de support pour une unité de diagnostic électronique pour un véhicule industriel

(30) Priority: 11.04.1997 IT TO970308
(43) Date of publication of application: 28.10.1998
(73) Proprietor: IVECO FIAT S.p.A., 10156 Torino (IT)
(72) Inventor: Varalda, Orlando, 10151 Torino (IT); Giannini, Giovanni, 10147 Torino (IT)
(74) Representative: Franzolin, Luigi

(56) References cited:
- DE-A- 3 628 782
- DE-A- 4 324 628
- US-A- 3 522 888
- US-A- 4 235 405
- US-A- 4 611 777
- US-A- 4 719 513
- US-A- 4 965 456
- US-A- 5 181 681

## Description

The present invention relates to a support trolley for an electronic diagnostic unit for an industrial vehicle.

A unit of this type generally comprises a housing provided with a display and a set of electrical connectors that can be connected, via flexible cables, to various electrical instruments and/or contacts disposed in the cabin of the industrial vehicle. As a result of the weight and bulk of the unit, it is difficult for an operator manually to lift the unit into the cabin and to work with the unit positioned on a seat.

Trolleys adapted to transport loads are known, but are not provided with lifting mechanisms. These trolleys also require an effort by the operator to lift the unit into the cabin.

Trolleys adapted to take up, lift and transport loads are also known. These trolleys, especially if motor-driven, do not enable a load to be readily moved in a small space. Moreover, they do not make it possible to bring a diagnostic unit into a position adjacent to the cabin of the vehicle and to position it so that the operator can make the necessary connections and carry out the relative checks while seated on a cabin seat.

The object of the invention is to provide a support trolley for a diagnostic unit for a cabin of an industrial vehicle, which is as simple and operates as reliably as possible, and is adapted to bring the diagnostic unit into a position adjacent to or inside the cabin of the industrial vehicle, making it possible appropriately to position the unit with respect to the operator.

US 5181681A discloses a support trolley comprising the features of the preamble of claim 1.

Document US 4,965,456 describes a support trolley for a radiation shielding wall.

According to the invention, this object is achieved by a support trolley of an electronic diagnostic unit of an industrial vehicle as defined in claim 1.

The column is advantageously provided with a substantially horizontal arm bearing the bracket and can be rotated about its vertical axis so as to enable the positioning of the arm and the unit with respect to the cabin.

For greater understanding of the invention, a preferred embodiment thereof is described below, by way of example, with reference to the accompanying drawings, in which:
Fig. 1 is a perspective view of a trolley of the invention;
Fig. 2 is a further perspective view of the trolley of Fig. 1;
Fig. 3 is a perspective view of the structure of the trolley;
Fig. 4 is a vertical section through a detail of the trolley, on an enlarged scale;
Fig. 5 is a cross-section along the line V-V of Fig. 4;
Fig. 6 is a horizontal section through a detail of Fig. 3 on the same scale as Fig. 4;
Fig. 7 is a partial lateral section through a support bracket for the unit, on an enlarged scale;
Fig. 8 shows a detail of Fig. 7, on a further enlarged scale;
Fig. 9 is a cross-section along the line IX-IX of Fig. 8;
Fig. 10 is a partial view of the bracket along the line X-X of Fig. 7.

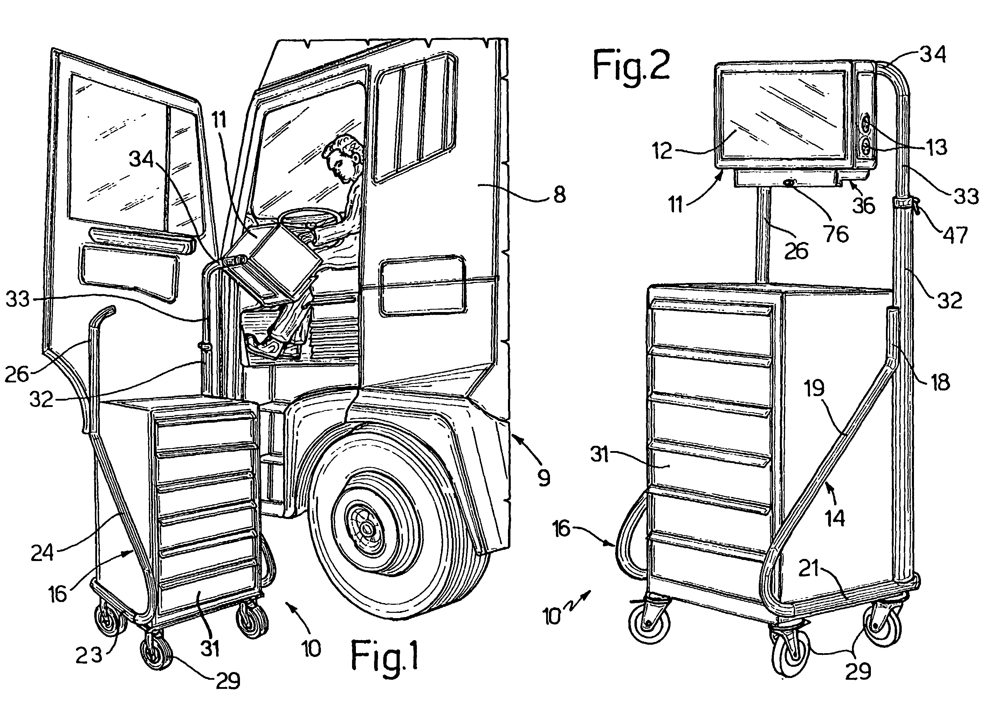

In Fig. 1, a driving cabin of an industrial vehicle 9 is shown overall by 8. As is known, the cabin 8 is disposed at a substantial height above ground. A support trolley for an electronic diagnostic unit 11 for instruments and/or control units accessible from the cabin 8 is shown overall by 10.

The unit 11 is substantially parallelepipedic in shape and has a front wall provided with a display in the form of a video screen 12 (Fig. 2). A lateral wall of the unit 11 is provided with a series of sockets 13 for the same number of electrical connectors (not shown) connected by cables (not shown) for the diagnosis of instruments and control units of the cabin 8.

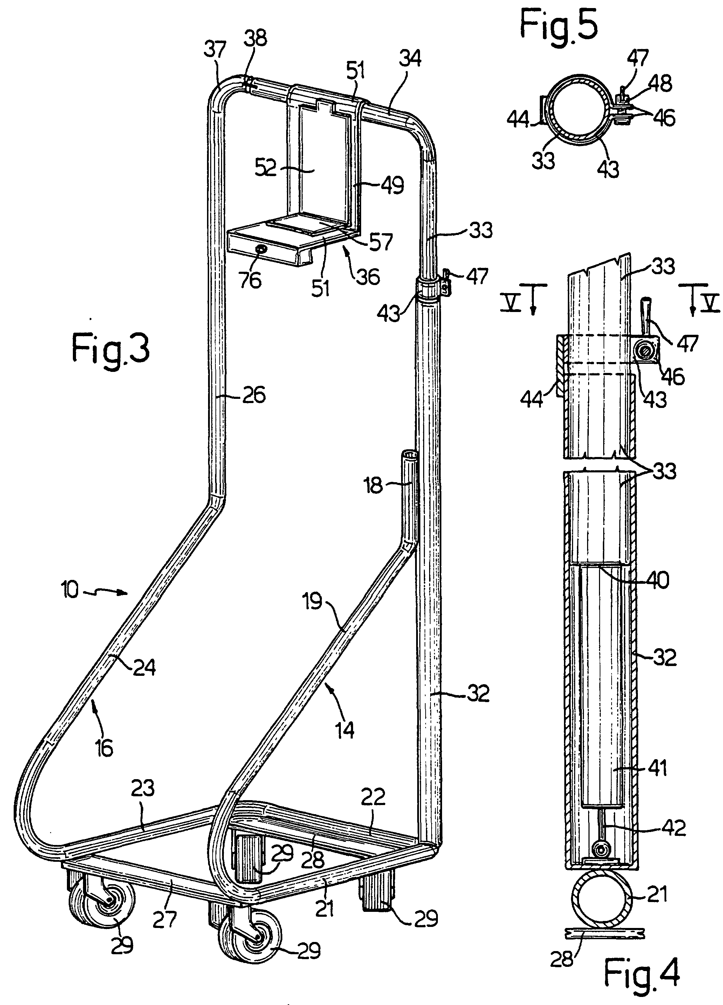

The trolley 10 comprises a structure formed by a pair of facing parallel metal frames 14 and 16 (Fig. 3) connected by at least one crossbar. In particular, this structure is substantially formed by a single shaped metal tube which comprises a first vertical portion 18, an inclined portion 19 and a horizontal portion 21 forming the frame 14. The portion 21 is followed by a C-shaped horizontal portion 22 forming one of the crossbars of the structure. The crossbar 22 is followed by a horizontal portion 23, an inclined portion 24 and a vertical portion 26 forming the frame 16.

The two horizontal portions 21 and 23 are further connected by two crossbars 27 and 28 each of which is provided with a corresponding pair of castors 29 that can be oriented and are known per se. The two crossbars 27 and 28 are adapted to bear a set of drawers 31 (Figs. 1 and 2) in which equipment, spare parts and the like can be placed.

A cylindrical tubular body 32 (Fig. 3) disposed vertically, in which a column 33 can rotate and slide telescopically, is secured between the portion 18 and the portion 21 of the frame 14. This column is formed by a tube having a portion bent at 90° which forms a horizontal tubular arm 34 which can therefore rotate about the vertical axis of the column 33. A bracket, shown overall by 36, is mounted on the arm 34 and is adapted to support the unit 11 as will be described in detail below.

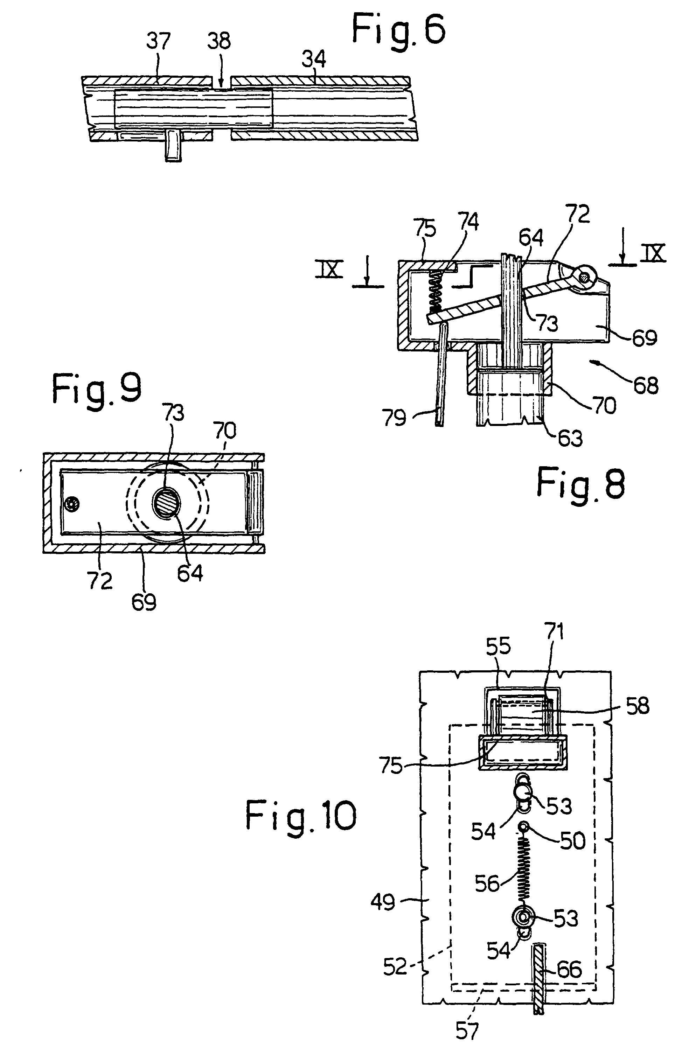

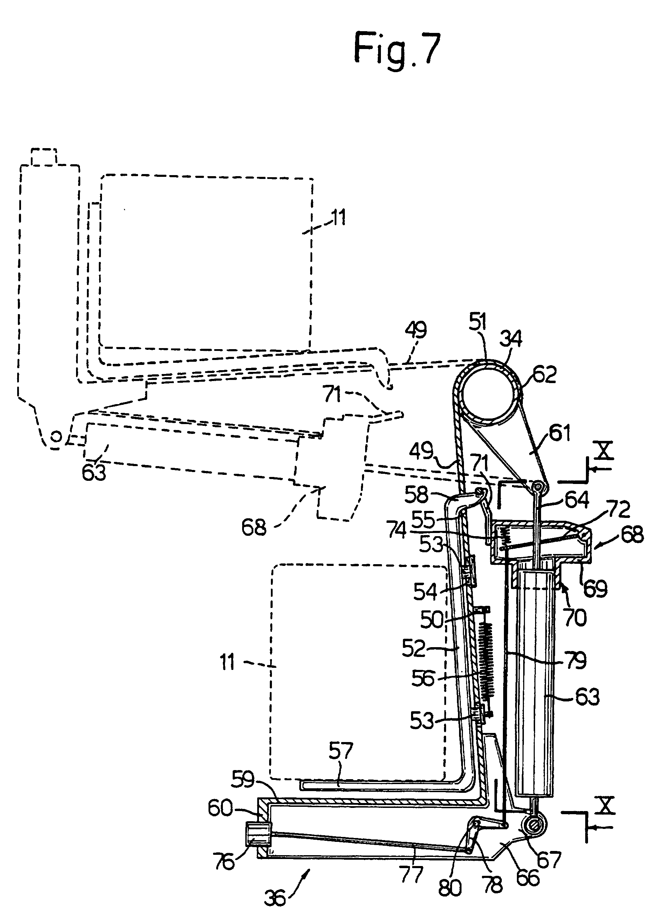

The tube of the column 33 and the arm 34 has a diameter equal to that of the tube of the frames 14 and 16. In turn, the portion 26 of the frame 16 bears a bent cylindrical portion 37 on whose free end there is disposed a connection device (Fig. 6) comprising a cylindrical body 38 housed coaxially in the cylindrical portion 37 that can be moved manually towards and away from the tubular arm 34 for engagement with or disengagement from the tube 34. In this way, when the portion 37 and the arm 34 are stably coupled, they form a single handle for the manual displacement of the trolley 10.

Elastic means for raising the column 33 are housed in the tubular body 32. In particular, these means comprise a pneumatic cylinder 41 (Fig. 4) of known type, which has an output member 42 fixed at the bottom to the body 32 and an upper end 40 fixed to the lower end of the column 33. The gas pressure in the pneumatic cylinder 41 is such as to raise the column 33 together with the bracket 36 and the unit 11.

Means for locking the column 33 are provided between the tubular body 32 and the column 33. These means comprise a C-shaped band 43 (Figs. 4 and 5), clasping the column 33 and having a lug 44 secured to the upper end of the tubular body 32. The band 43 further comprises two bent and perforated flanges 46 adapted to be closed up by actuating a rotary handle 47 on the flanges 46 and rigid with a cam 48.

The column 33 is released by actuating the handle 47. By acting manually on the arm 34, the latter may be lowered by compressing the gas in the pneumatic cylinder 41, or may be controlled in order to be raised by the pneumatic cylinder 41. Moreover, the arm 34 may be rotated about the axis of the column 33 in order horizontally to position the bracket 36 in the desired angular direction.

The bracket 36 is formed by a rear plate 49, preferably of sheet metal, which is provided with a shaped portion 51 (Fig. 7) of circular cross-section extending more than 180° about the arm 34. The shaped portion 51 clasps the arm 34 and can be rotated thereon in order to enable the vertical positioning of the unit 11. A plate 52 is disposed on the plate 49 facing this plate 49 and is guided parallel thereto by two pins 53 extending from the plate 52 and engaging two holes 54 (Fig. 10) of the rear plate 49. The plate 52 is drawn upwards by a helical spring 56 connected between a prolongation of the lower pin 53 and a pin 50 of the rear plate 49.

The plate 52 is further provided with an actuating projection 57 (Fig. 7) extending substantially in a direction perpendicular to the plate 52. The plate 52 is lastly provided at the top with a hook member 58 extending on the side opposite to the projection 57 and passing through a port 55 of the plate 49. The plate 49 is in turn provided at the bottom with a shaped portion 59 forming a support plate for the unit 11. The shaped portion 59 ends with a further front shaped portion 60 substantially parallel to the plate 49 which forms a riser for the bracket 36.

The arm 34 is provided with a triangular shaped member 61 slightly inclined with respect to the column 33 and passing through a slot 62 provided in the shaped portion 51 of circular cross-section. A second pneumatic cylinder 63 is disposed between the member 61 and the plate 49 to enable the rotation of the bracket 36 about the arm 34. In particular, the pneumatic cylinder 63 is provided with an output member 64. A reinforcing rib 66 is secured on the shaped portion 59 of the plate 49 and has a member 67 on which an end of the cylinder 63 is pivoted. In turn, the end of the output member 64 is pivoted on the member 61.

A positioning device shown overall by 68 and adapted to achieve stable angular positions of the bracket 36 about the arm 34 is disposed between the cylinder 63 and the output member 64. The positioning device 68 comprises a body 69 (Figs. 8 and 9) shaped as a box. The body 69 is rigid with a collar 70 secured to the upper end of the cylinder 63. A frame 71, secured on a front wall of the body 69 facing the plate 49, is adapted to be hooked on the member 58 of the wall 52, in order to prevent relative movement between the wall 49 and the cylinder 63 and to retain the bracket 36 at rest, with the projection 57 in a horizontal position, as shown in Fig. 7.

A member formed by an elongate plate 72 having a though central hole 73 through which the output member 64 passes is pivoted on the two lateral walls of the body 69. The hole 73 has a diameter slightly greater than the diameter of the output member 64 which has a cylindrical shape. The plate 72 is urged in an anti-clockwise direction (Fig. 8) by a compression spring 74, disposed between this plate 72 and a shoulder 75 of the body 69. When the plate 72 is substantially perpendicular to the member 64, the latter is free to slide axially with respect to the cylinder 63. When, however, the spring 74 holds the plate 72 inclined, as in Figs. 7 and 8, the member 64 comes into contact with the edges of the hole 73 creating an obstacle preventing any sliding of the member 64 with respect to the plate likely to cause an anti-clockwise rotation of the bracket 36. However, when the spring 74 holds the plate 72 inclined, the member 64 comes into contact with the edges of the hole 73 and the member 64 can slide with respect to the plate so as to cause a clockwise rotation of the bracket 36.

Lastly, the front shaped portion 60 of the plate 49 is provided with a push button 76 connected, via a strut 77 parallel to the shaped portion 59, to a recall lever 78. The latter is pivoted on a pin 80 of the rib 66 and is connected to a strut 79 guided parallel to the cylinder 63 by a hole in the base wall of the body 69. When the push button 76 is depressed, the strut 79 engages a portion of the plate 72 opposite to its pivot, in order to cause it to rotate in a clockwise direction against the action of the spring 74 and to dispose it in the position in which the output member 64 does not intercept the edges of the hole 73.

In practice, when the hook member 58 is uncoupled from the frame 71, the bracket 36 is free to rotate in a clockwise direction, thereby raising the wall 59 under the thrust of the cylinder 63 and once a balanced angular position is reached it cannot rotate anticlockwise and lower the wall 59 as a result of the above-mentioned interference between the member 74 and the plate 72. In order to return the shaped portion 59 downwards from the balanced position, it is necessary to depress the push button 76, disposing the plate 72 substantially perpendicular to the member 64, thus eliminating the interference between the plate 72 and the member 64 and to apply an anti-clockwise rotation to the bracket 36.

The trolley 10 operates as follows.

At rest, the column 33 is in the lower position of Figs. 2 and 3, with the arm 34 connected to the bent portion 37 of the frame 16 by the connection device 38. The column 33 then holds the cylinder 41 in the lower position and is locked in this position by the band 43 held tightly by the handle 47. In turn, the cylinder 63 is hooked with the frame 71 on the member 58 of the wall 52.

The bracket 36 is thus held in the rest position of Fig. 2, in which the plate 49 and the plate 52 are substantially vertical and the shaped portion 59 and the member 57 are horizontal, as a result of which the trolley 10 has a very compact configuration.

The unit 11 may then be supported on the shaped portion 59 with the video 12 disposed towards the front side of the bracket 36. In turn, the drawers 31 may be disposed on the crossbars 27 and 28. The operator, by grasping the portion 37 of the frame 16 and the arm 34 of the column 33, may then readily move the trolley 10 in order to bring it alongside the cabin 8 (Fig. 1) of the vehicle 9 to be diagnosed.

The operator then unlocks the connection device 38 (Fig. 6) of the arm 34. Moreover, holding the arm 34 with one hand, he acts on the handle 47 (Fig. 4) unlocking the column 33 from the band 43. The compressed gas of the cylinder 41 then causes the column 33 to move upwards, under the control of the operator who is holding the arm 34. In this way, the bracket 36 is brought to the desired height for work in the cabin 8.

At the same time, the operator rotates the column 33, for instance by some 90° as shown in Fig. 1, thus positioning the bracket 36 in the horizontal plane so as to direct the video 12 towards the interior of the cabin 8. The operator finally locks the column 33 in the position reached by acting on the handle 47.

As a result of the arrangement of the unit 11 on the shaped portion 59, a base portion of the unit 11 has been disposed on the member 57 causing the latter and the plate 52 rigid therewith to be slightly lowered against the action of the spring 56 (Fig. 7) as a result of which the member 58 is unhooked from the frame 71.

The operator may then rotate the bracket 36 in the clockwise direction and once a desired angular position of the unit 11 has been obtained, the operator releases the bracket 36 which, under the action of the weight of the unit, would tend to rotate in the anti-clockwise direction against the action of the cylinder 63; the action of the positioning device 68 described above prevents this anti-clockwise rotation of the bracket 36 and helps to maintain the bracket 36 and the unit 11 borne thereby in the angular position obtained. In this way, the bracket 36 is positioned in the vertical plane for easy reading of the video 12, as shown in Fig. 1.

In order to lower the unit 11, the operator depresses the push button 76 as a result of which the plate 72 is uncoupled from the rod 64 and the bracket 36 may rotate in the anti-clockwise direction under the action of the weight of the unit and possibly by means of a manual thrust; on reaching a new angular position, the push button 76 is released again disposing the bracket 36 in a stable angular position. In Fig. 7, the position that can be reached by the bracket 36 at maximum rotation is shown in dashed lines.

The operator may then make the electrical connections of the sockets 13 (Figs. 1 and 2) of the unit 11 with the instruments and other control units of the cabin 8 and carry out the necessary diagnostic operations. After these operations, the operator carries out the reverse operations to return the bracket 36 to the rest position.

The advantages of the trolley of the invention with respect to known trolleys are evident from the above description.

At rest, the trolley 10 has a very compact configuration and therefore occupies little space. Moreover, the trolley 10 makes it possible readily to transport the unit 11, even in small spaces, such as workshops, bringing it alongside the cabin 8 of the vehicle 9. Lastly, the trolley 10 makes it possible to raise the unit 11 and to position it both horizontally and vertically, bringing it into the most appropriate position for the operator seated on the seat of the cabin 8.

It is appreciated that many modifications and improvements may be made to the trolley 10 as described without departing from the scope of the claims. For instance, the frames 14 and 16 may be formed by two separate tubes, and then be connected by crossbars. Moreover, the means for locking the column 33 on the tubular body 32 and the arm 34 on the frame 16 may take forms other than those described. Lastly, one or both the gas cylinders 41 and 63 may be replaced by springs.

## Claims

1. A support trolley for an electronic diagnostic unit (11) for an industrial vehicle (9) provided with a cabin (8), comprising a structure (14,16,17,27,28) provided with wheels (29) and bearing a support bracket (36) for the electronic diagnostic unit (11),
wherein
said structure (14,16,17,27,28) comprises a vertical column (33) bearing the support bracket (36); said vertical column (33) being movable with respect to said structure (14,16,17,27,28) so that the support bracket (36) can be raised and lowered; said column being provided with a substantially horizontal arm (34) bearing the bracket;
**characterised in that** said vertical column (33) is rotable about its vertical axis to enable the positioning of said arm (34) and said electronic diagnostic unit (11) in desired angular directions.

2. A trolley as claimed in claim 1, **characterised in that** the structure (14, 16, 17, 27, 28) comprises a pair of lateral frames (14, 16) facing one another and connected by at least a first crossbar (27, 28), wherein a set of drawers (31) can be disposed between these frames (14, 16).

3. A trolley as claimed in claim 2, **characterised in that** the frames (14, 16) are connected by at least a second crossbar (22), these frames (14, 16) and this second crossbar (22) being formed by a single bent metal tube.

4. A trolley as claimed in claim 2 or 3, **characterised in that** a first (14) of these frames (14, 16) bears a vertical tubular body (32), the column (33) being movable telescopically with respect to this vertical tubular body (32) under the action of lifting means (41, 42).

5. A trolley as claimed in claim 4, **characterised in that** the lifting means (41, 42) comprise a compressed gas cylinder (41) housed in the vertical tubular body (42) and having a member (40) engaging the column (33), this gas being compressed to a pressure such as to allow the column (33) to be raised, the downward return of the column (33) being carried out in such a way as to compress the gas, locking means (43, 47) of the type that can be released being provided between the column (33) and the vertical tubular body (32).

6. A trolley as claimed in claim 5, **characterised in that** the locking means (43, 47) comprise a band (43) borne by the vertical tubular body (32) adapted to lock, when actuated, the column (33) angularly and axially on the vertical tubular body (32).

7. A trolley as claimed in one of claims 2 to 6, **characterised in that** a second (16) of the frames (14, 16) comprises a vertical portion (26) ending at the top with a horizontal bent portion (37), the arm (34) being adapted to be aligned with the horizontal bent portion (37) when the column (33) is in the lowered position retracted into the tubular body (32).

8. A trolley as claimed in claim 7, **characterised in that** the arm (34) and the horizontal bent portion (37) have a substantially identical section adapted to be grasped to move the trolley, locking means (38) of the type that can be uncoupled, being provided between the arm (34) and the horizontal bent portion (37).

9. A trolley as claimed in one of the preceding claims, **characterised in that** the bracket (36) may be angularly oriented about a horizontal axis of the arm (34).

10. A trolley as claimed in claim 9, **characterised in that** the arm (34) has a circular cross-section, the bracket (36) being formed by a rear plate (49) and by a support plate (59) substantially perpendicular to the rear plate (49) and adapted to provide a support surface for the unit (11), the rear plate (49) being provided with a shaped portion (51) of substantially circular section at least partially clasping the arm (34), this shaped portion (51) of substantially circular section being adapted to rotate on the arm (34) to enable this vertical positioning.

11. A trolley as claimed in claim 10, **characterised in that** the bracket (36) further comprises an unlocking member (57) actuated by the arrangement of the unit (11) on the bracket (36), this unlocking member (57) being adapted to actuate unlocking means so as to enable the angular positioning of the bracket about the arm.

12. A trolley as claimed in claim 11, **characterised in that** it comprises a second compressed gas cylinder (63) disposed between the rear plate (49) and a member (61) of the arm (34) in order to enable the controlled rotation of the bracket (36) about the arm (34), this controlled rotation taking place between a rest position in which the rear plate (49) is substantially vertical and a position in which the rear plate (49) is upwardly inclined.

13. A trolley as claimed in any one of claims 9 to 12, **characterised in that** it comprises positioning means (68) provided between the bracket (36) and the arm (34) in order to achieve stable angular positions of the bracket about the arm (34).

14. A trolley as claimed in claim 13, dependent on claim 12, **characterised in that** the second cylinder (63) is pivoted on the bracket (36) and is provided with an output member (64) pivoted on the member (61), the positioning means (68) comprising a pivoted elongate body (72) provided with a hole (73) through which this output member (64) extends, this pivoted elongate body (72) being urged by elastic means (74) into a position in which the elongate body (72) is disposed inclined with respect to the output member (64) which is disposed in contact with the walls of the hole (73) preventing relative movement between the output member (64) and the elongate body (72).

15. A trolley as claimed in claim 14, **characterised in that** the elongate body (72) is pivoted on a housing borne by the second cylinder (63), manual control means (76-79) being provided to disable these elastic means (74) and to release the output member (64) from the walls of the hole (73).

16. A trolley as claimed in claim 15, **characterised in that** the support plate (59) has a front edge (60), the manual control means (76-79) comprising a push button (76) disposed on this front edge (60) and means (77-79) for transmitting movement between the push button (76) and the pivoted elongate body (72).

17. A trolley as claimed in claim 15 or 16, **characterised in that** the unlocking means comprise a hook member (58) extending from the rear plate (49) and adapted to hook, in a releasable manner, a member (71) borne by the housing (69) when the bracket (34) is in a rest position.

## Patentansprüche

1. Transportkarren für eine elektronische Diagnoseeinheit (11) für ein Lastkraftfahrzeug (9), das mit einer Kabine (8) versehen ist, mit einer Anordnung (14, 16, 17, 27, 28), die mit Rädern (29) versehen ist, und eine Halterungsstütze (36) für die elektronische Diagnoseeinheit (11) trägt, wobei die Anordnung (14, 16, 17, 27, 28) eine vertikale Säule (33) aufweist, welche die Halterungsstütze (36) trägt; die vertikale Säule (33) in Bezug auf die Anordnung (14, 16, 17, 27, 28) beweglich ist, so dass die Halterungsstütze (36) angehoben und abgesenkt werden kann; und die Säule mit einem im wesentlichen horizontalen Arm (34) versehen ist, der die Stütze trägt; **dadurch gekennzeichnet, dass** die vertikale Säule (33) um ihre Vertikalachse drehbar ist, um das Positionieren des Arms (34) und der elektronischen Diagnoseeinheit (11) in gewünschten Winkelrichtungen zu ermöglichen.

2. Transportkarren nach Anspruch 1, **dadurch gekennzeichnet, dass** die Anordnung (14, 16, 17, 27, 28) ein Paar von Quergestellen (14, 16) aufweist, die einander gegenüberliegen, und durch zumindest eine erste Querstange (27, 28) verbunden sind, wobei eine Gruppe von Auszügen (31) zwischen diesen Rahmen (14, 16) angeordnet werden kann.

3. Transportkarren nach Anspruch 2, **dadurch gekennzeichnet, dass** die Rahmen (14, 16) durch zumindest eine zweite Querstange (22) verbunden sind, wobei dieser Rahmen (14, 16) und diese zweite Querstange (22) durch ein einziges, gebogenes Metallrohr gebildet werden.

4. Transportkarren nach Anspruch 2 oder 3, **dadurch gekennzeichnet, dass** ein erster (14) dieser Rahmen (14, 16) einen vertikalen, rohrförmigen Körper (32) trägt, wobei die Säule (33) teleskopartig in Bezug auf diesen vertikalen, rohrförmigen Körper (32) unter Einwirkung einer Hebevorrichtung (41, 42) beweglich ist.

5. Transportkarren nach Anspruch 4, **dadurch gekennzeichnet, dass** die Hebevorrichtungen (41, 42) einen Druckgaszylinder (41) aufweisen, der in dem vertikalen, rohrförmigen Körper (42) aufgenommen ist, und ein im Eingriff mit der Säule (33) stehendes Teil (40) aufweist, wobei das Gas auf einen derartigen Druck komprimiert ist, dass die Säule (33) angehoben werden kann, und die Rückstellung nach unten der Säule (33) so durchgeführt wird, dass das Gas komprimiert wird, und eine lösbare Verriegelungsvorrichtung (43, 47) zwischen der Säule (33) und dem vertikalen, rohrförmigen Körper (32) vorgesehen ist.

6. Förderkarren nach Anspruch 5, **dadurch gekennzeichnet, dass** die Verriegelungsvorrichtungen (43, 47) ein Band (43) aufweisen, das von dem vertikalen, rohrförmigen Körper (32) getragen wird, und dazu ausgebildet ist, bei Betätigung die Säule (33) in Winkelrichtung und Axialrichtung auf dem vertikalen, rohrförmigen Körper (32) zu verriegeln.

7. Transportkarren nach einem der Ansprüche 2 bis 6, **dadurch gekennzeichnet, dass** ein zweites (16) der Gestelle (14, 16) einen vertikalen Abschnitt (26) aufweist, der oben in einem horizontalen, gebogenen Abschnitt (37) endet, wobei der Arm (34) so ausgebildet ist, dass er mit dem horizontalen, gebogenen Abschnitt (37) ausgerichtet ist, wenn die Säule (33) sich in der abgesenkten Position, eingefahren in den rohrförmigen Körper (32), befindet.

8. Transportkarren nach Anspruch 7, **dadurch gekennzeichnet, dass** der Arm (34) und der horizontale, gebogene Abschnitt (37) einen im wesentlichen identischen Teilabschnitt aufweist, der dazu ausgebildet ist, zur Bewegung des Transportkarrens ergriffen zu werden, wobei eine entkuppelbare Verriegelungsvorrichtung (38) zwischen dem Arm (34) und dem horizontalen, gebogenen Abschnitt (37) vorgesehen ist.

9. Transportkarren nach einem der voranstehenden Ansprüche, **dadurch gekennzeichnet, dass** die Stütze (36) im Winkel um eine Horizontalachse des Arms (34) ausgerichtet werden kann.

10. Transportkarren nach Anspruch 9, **dadurch gekennzeichnet, dass** der Arm (34) einen kreisförmigen Querschnitt aufweist, die Stütze (36) durch eine Rückplatte (49) und durch eine Halteplatte (59) gebildet wird, die im wesentlichen senkrecht zur Rückplatte (49) verläuft, und dazu ausgebildet ist, eine Halterungsoberfläche für die Einheit (11) zur Verfügung zu stellen, wobei die Rückplatte (49) mit einem Formabschnitt (51) mit im wesentlichen kreisförmigem Querschnitt versehen ist, der zumindest teilweise den Arm (34) einklemmt, wobei dieser Formabschnitt (51) mit im wesentlichen kreisförmigem Querschnitt dazu ausgebildet ist, sich auf dem Arm (34) zu drehen, um diese vertikale Positionierung zu ermöglichen.

11. Transportkarren nach Anspruch 10, **dadurch gekennzeichnet, dass** die Stütze (36) weiterhin ein Entriegelungsteil (57) aufweist, das durch die Anordnung der Einheit (11) auf der Stütze (36) betätigt wird, wobei dieses Entriegelungsteil (57) dazu ausgebildet ist, eine Entriegelungsvorrichtung zu betätigen, um die Winkelpositionierung der Stütze um den Arm zu ermöglichen.

12. Transportkarren nach Anspruch 11, **dadurch gekennzeichnet, dass** er einen zweiten Druckgaszylinder (63) aufweist, der zwischen der Rückplatte (49) und einem Teil (61) des Arms (34) vorgesehen ist, um die kontrollierte Drehung der Stütze (36) um den Arm (34) zu ermöglichen, wobei diese kontrollierte Drehung zwischen einer Ruhelage, in welcher die Rückplatte (49) im wesentlichen vertikal verläuft, und einer Position stattfindet, in welcher die Rückplatte (49) nach oben geneigt ist.

13. Transportkarren nach einem der Ansprüche 9 bis 12, **dadurch gekennzeichnet, dass** er eine Positionierungsvorrichtung (68) aufweist, die zwischen der Stütze (36) und dem Arm (34) vorgesehen ist, um stabile Winkelpositionen der Stütze um den Arm (34) zu erzielen.

14. Transportkarren nach Anspruch 13, in Abhängigkeit von Anspruch 12, **dadurch gekennzeichnet, dass** der zweite Zylinder (63) auf der Stütze (36) verschwenkt wird, und mit einem Ausgangsteil (64) versehen ist, das auf dem Teil (61) verschwenkt wird, wobei die Positionierungsvorrichtung (68) einen verschwenkten, länglichen Körper (72) aufweist, der mit einem Loch (73) versehen ist, durch welches sich dieses Ausgangsteil (64) erstreckt, dieser verschwenkte, längliche Körper (72) durch eine elastische Vorrichtung (74) in eine Position gedrückt wird, in welcher der längliche Körper (72) geneigt in Bezug auf das Ausgangsteil (64) angeordnet ist, das in Berührung mit den Wänden des Lochs (73) angeordnet ist, was eine Relativbewegung zwischen dem Ausgangsteil (64) und dem länglichen Körper (72) verhindert.

15. Transportkarren nach Anspruch 14, **dadurch gekennzeichnet, dass** der längliche Körper (72) auf einem Gehäuse verschwenkt wird, das von dem zweiten Zylinder (63) getragen wird, wobei eine Handsteuervorrichtung (76 - 79) vorgesehen ist, um diese elastische Vorrichtung (74) zu sperren, und das Ausgangsteil (64) von den Wänden des Lochs (73) freizugeben.

16. Transportkarren nach Anspruch 15, **dadurch gekennzeichnet, dass** die Halterungsplatte (59) einen Vorderrand (60) aufweist, die Handsteuervorrichtung (76 - 79) einen Druckknopf (76) aufweist, der auf diesen Vorderrand (60) angeordnet ist, und eine Vorrichtung (77 - 79) zur Übertragung einer Bewegung zwischen dem Druckknopf (76) und dem verschwenkten, länglichen Körper (72).

17. Transportkarren nach Anspruch 15 oder 16, **dadurch gekennzeichnet, dass** die Entriegelungsvorrichtungen ein Hakenteil (58) aufweisen, das von der Rückplatte (49) ausgeht, und dazu ausgebildet ist, lösbar ein Teil (71) einzuhaken, das von dem Gehäuse (69) getragen wird, wenn sich die Stütze (34) in einer Ruhelage befindet.

## Revendications

1. Chariot de support pour une unité de diagnostic électronique (11) pour un véhicule industriel (9) pourvu d'une cabine (8), comprenant une structure (14, 16, 17, 27, 28) équipée de roues (29) et portant un support (36) pour l'unité de diagnostic électronique (11) ;
dans lequel ladite structure (14, 16, 17, 27, 28) comprend une colonne verticale (33) portant le support (36); ladite colonne verticale (33) étant susceptible de se déplacer par rapport à ladite structure (14, 16, 17, 27, 28) de sorte que le support (36) peut être relevé et abaissé ; ladite colonne étant pourvue d'un bras sensiblement horizontal (34) qui porte le support ;
**caractérisé en ce que** ladite colonne verticale (33) est susceptible de tourner autour de son axe vertical afin de permettre le positionnement dudit bras (34) et de ladite unité de diagnostic électronique (11) dans des directions angulaires désirées.

2. Chariot selon la revendication 1, **caractérisé en ce que** la structure (14, 16, 17, 27, 28) comprend une paire de châssis latéraux (14, 16) qui se font face l'un à l'autre et qui sont reliés par au moins une première barre de châssis (27, 28), dans lequel un jeu de tiroirs (31) peut être disposé entre ces châssis (14, 16).

3. Chariot selon la revendication 2, **caractérisé en ce que** les châssis (14, 16) sont reliés par au moins une deuxième barre de châssis (22), ces châssis (14, 16) et cette deuxième barre de châssis (22) étant constitués par un simple tube en métal recourbé.

4. Chariot selon la revendication 2 ou 3, **caractérisé en ce qu'**un premier (14) de ces châssis (14, 16) porte un corps tubulaire vertical (32), la colonne (33) étant susceptible de se déplacer de façon télescopique par rapport à ce corps tubulaire vertical (32) sous l'action de moyens de relevage (41, 42).

5. Chariot selon la revendication 4, **caractérisé en ce que** les moyens de relevage (41, 42) comprennent un vérin à gaz comprimé (41) logé dans le corps tubulaire vertical (42) et comportant un membre (40) qui coopère avec la colonne (33), ce gaz étant comprimé à une pression telle qu'elle permette à la colonne (33) d'être relevée, le déplacement en rappel vers le bas de la colonne (33) étant réalisé de telle sorte que le gaz soit comprimé, des moyens de blocage (43, 47) du genre de ceux qui peuvent être libérés étant prévus entre la colonne (33) et le corps tubulaire vertical (32).

6. Chariot selon la revendication 5, **caractérisé en ce que** les moyens de blocage (43, 47) comprennent une bande (43) portée par le corps tubulaire vertical (32) et adaptée pour bloquer, lorsqu'elle est actionnée, la colonne (33) angulairement et axialement sur le corps tubulaire vertical (32).

7. Chariot selon l'une quelconque des revendications 2 à 6, **caractérisé en ce qu'**un deuxième (16) des châssis (14, 16) comprend une portion verticale (26) qui se termine au niveau de sa partie supérieure par une portion horizontale courbe (37), le bras (34) étant adapté pour être aligné avec la portion horizontale courbe (37) lorsque la colonne (33) se trouve dans la position abaissée rentrée dans le corps tubulaire (32).

8. Chariot selon la revendication 7, **caractérisé en ce que** le bras (34) et la portion horizontale courbe (37) comportent une section sensiblement identique adaptée pour être saisie afin de pouvoir déplacer le chariot, des moyens de blocage (38) du genre de ceux qui peuvent être libérés étant prévus entre le bras (34) et la portion horizontale courbe (37).

9. Chariot selon l'une quelconque des revendications précédentes, **caractérisé en ce que** le support (36) peut être orienté angulairement autour d'un axe horizontal du bras (34).

10. Chariot selon la revendication 9, **caractérisé en ce que** le bras (34) comporte une section transversale circulaire, le support (36) étant constitué par une plaque arrière (49) et par une plaque de support (59) sensiblement perpendiculaire à la plaque arrière (49) et étant adapté pour procurer une surface de support pour l'unité (11), la plaque arriére (49) comportant une portion formée (51) d'une section sensiblement circulaire qui saisit le bras (34) au moins partiellement, cette portion formée (51) d'une section sensiblement circulaire étant adaptée pour tourner sur le bras (34) de manière à rendre possible ce positionnement vertical.

11. Chariot selon la revendication 10, **caractérisé en ce que** le support (36) comprend en outre un organe de déblocage (57) commandé par l'agencement de l'unité (11) sur le support (36), cet organe de déblocage (57) étant adapté pour actionner les moyens de déblocage, de manière à rendre possible le positionnement angulaire du support autour du bras.

12. Chariot selon la revendication 11, **caractérisé en ce qu'**il comprend un deuxième vérin à gaz comprimé (63) placé entre la plaque arrière (49) et un membre (61) du bras (34) de manière à rendre possible la rotation contrôlée du support (36) autour du bras (34), cette rotation contrôlée se produisant entre une position de repos dans laquelle la plaque arrière (49) se trouve sensiblement à la verticale et une position dans laquelle la plaque arrière (49) est inclinée vers le haut.

13. Chariot selon l'une quelconque des revendications 9 à 12, **caractérisé en ce qu'**il comprend des moyens de positionnement (68) placés entre le support (36) et le bras (34) de manière à atteindre une position angulaire stable du support autour du bras (34).

14. Chariot selon la revendication 13, dépendante de la revendication 12, **caractérisé en ce que** le deuxième vérin (63) pivote sur le support (36) et qu'il comporte un membre de sortie (64) qui pivote sur le membre (61), les moyens de positionnement (68) comprenant un corps allongé susceptible de pivoter (72) comportant un trou (73) à travers lequel ce membre de sortie (64) se prolonge, ce corps allongé susceptible de pivoter (72) étant forcé par des moyens élastiques (74) dans une position dans laquelle le corps allongé (72) se trouve incliné par rapport au membre de sortie (64) qui est placé en contact avec les parois du trou (73) de manière à empêcher tout mouvement relatif entre le membre de sortie (64) et le corps allongé (72).

15. Chariot selon la revendication 14, **caractérisé en ce que** le corps allongé (72) est susceptible de pivoter sur un boîtier porté par le deuxième vérin (63), des moyens de commande manuels (76 à 79) étant prévus afin de désactiver ces moyens élastiques (74) et de libérer le membre de sortie (64) des parois du trou (73).

16. Chariot selon la revendication 15, **caractérisé en ce que** la plaque arrière (59) comporte un bord avant (60), les moyens de commande manuels (76 à 79) comprenant un bouton poussoir (76) disposé sur ce bord avant (60) ainsi que des moyens (77 à 79) adaptés pour transmettre un mouvement entre le bouton poussoir (76) et le corps allongé susceptible de pivoter (72).

17. Chariot selon la revendication 15 ou 16, **caractérisé en ce que** les moyens de déblocage comprennent un membre formant crochet (58) qui se prolonge depuis la plaque arrière (49) et qui est adapté pour crocheter, de façon amovible, un membre (71) porté par le boîtier (69) lorsque le support (34) se trouve dans une position de repos.
